# EUROPÄISCHE PATENTANMELDUNG

(11) **EP 0 915 369 A1**
(43) Veröffentlichungstag der Anmeldung: **12.05.1999**
(21) Anmeldenummer: 98120536.2
(22) Anmeldetag: 30.10.1998
(51) Int. Cl.: G03B 27/46

(54) **Verfahren und Vorrichtung zur Herstellung von Ausweiss-Karten**

(30) Priorität: 05.11.1997 DE 19748724
(71) Anmelder: BUNDESDRUCKEREI GmbH, D-10958 Berlin (DE)
(72) Erfinder: Paugstadt Ralf, Dr., 10115 Berlin (DE); Franz-Burgholz, Arnim, 10976 Berlin (DE)
(74) Vertreter: Riebling, Peter, Dr.-Ing.

(57) **Zusammenfassung**

Es wird ein Verfahren zur Personalisierung von Wertdokumenten beschrieben, deren Oberfläche vorzugsweise strahlempfindlich ausgebildet ist und die in unterschiedliche Felder unterteilt sind, auf denen mittels Strahlbelichtung Bild- und/oder alphanumerische Informationen einschreibbar sind. Zur Erreichung einer hohen Belichtungsgeschwindigkeit ist vorgesehen, daß zur Belichtung des Wertdokumentes mindestens ein Lichtprozessor vorgesehen ist, der aus einem Feld von einer Vielzahl gleichzeitig ansteuerbarer, strahlerzeugender und/oder strahlumlenkender Steuerelementen besteht, die den bilderzeugenden Strahl auf das strahlempfindliche Wertdokument lenken. Damit werden alle Bilddaten aus einer gemeinsamen Datenbank parallel ausgelesen und zur gleichzeitigen und simultanen Ansteuerung alle Steuerelemente verwendet, was mit einer hohen Verkürzung der Belichtungszeit des Wertdokumentes verbunden ist.

## Beschreibung

Die Erfindung betrifft ein Verfahren und eine zur Ausführung des Verfahrens dienende Vorrichtung zur Personalisierung von Wertdokumenten, insbesondere ID-Karten, Führerscheinen und anderen Sicherheits- und Wertdokumenten.

Unter dem Begriff 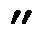 Personalisierung" wird hierbei die Ausstattung eines Wertdokument-Substrats mit den individuellen Angaben, wie Namen, Adressen, Paßbildern, Unterschriften, Fingerabdrücken, Prüfsummen oder dergleichen verstanden.

Bisher ist es bekannt, derartige Wertdokumente insbesondere im Belichtungsverfahren zu personalisieren, wobei mit einer Kathodenstrahlröhre ein auf dem Phosphorschirm der Kathodenstrahlröhre zeilenförmig abgelenkter Leuchtpunkt modulierter Intensität auf das Wertdokument abgebildet wird und hierbei die entsprechende personalisierte Information auf das Wertdokument geschrieben wird.

Ein anderes Personalisierungsverfahren ist, das Wertdokument zu bedrucken, was aber nicht Gegenstand der vorliegenden Erfindung ist. Gegenstand der Erfindung ist also eine Personalisierung von Wertdokumenten durch Bestrahlung, insbesondere durch Lichtbestrahlung sowohl im sichtbaren als auch im unsichtbaren Spektralbereich.

Bei den bisher bekannten Bestrahlungsverfahren mittels Elektronenstrahlröhre bestand der Nachteil, daß die Personalisierungsdaten in digitaler Form in einer Datenbank vorliegen und zur Ansteuerung der Kathodenstrahlröhre aber erst in eine serielle, analoge Form umgewandelt werden müssen. Hierbei entsteht ein hoher Geräteaufwand und es wird entsprechende Umsetzungszeit für die digital/analog Wandlung , sowie für die punktweise Belichtung des Wertdokuments benötigt. Die Belichtungsqualität ist im Vergleich zu den Kosten eines derartigen Kathodenstrahlbelichters relativ schlecht, weil nur mit hochwertigen Kathodenstrahlbelichtern gute Bildqualitäten erreicht werden.

Außerdem sind die bekannten Kathodenstrahlbelichter relativ schwer, haben einen hohen Platzbedarf und sind anfällig gegen magnetische Felder. Im übrigen bestehen Nachteile wegen Verschleiß der vorhandenen Leuchtschichten und die Gefahr des Einbrennens des Strahls auf der Leuchtschicht. Überdies ist ferner nachteilig, daß für die Farbbelichtung von Wertdokumenten hintereinander folgend drei Belichtungsschritte mit unterschiedlichen Farbfiltern durchgeführt werden müssen, was weitere Zeit und einen hohen Geräteaufwand bedeutet.

Der Erfindung liegt deshalb die Aufgabe zugrunde, ein Verfahren und eine Vorrichtung zur Personalisierung von Wertdokumenten der eingangs genannten Art so weiterzubilden, daß derartige Wertdokumente im Belichtungsverfahren wesentlich schneller, kostengünstiger und betriebssicherer belichtet werden können.

Zur Lösung der gestellten Aufgabe dient die technische Lehre des Anspruches 1.

Mit der technischen Lehre nach der Erfindung wird der Vorteil erreicht, daß die parallele Belichtung der Bildpixel einer Grafik auf einem Wertdokument in einem Arbeitsvorgang erfolgt. Hierbei umfaßt die Erfindung sowohl analoge Belichtungsarrays, wie z. B. LC- oder LED-Arrays, die mit einer kontinuierlichen Skala von Helligkeiten arbeiten können als auch digitale Belichtungsarrays, deren Steuer- oder Belichtungselemente nur nach dem Ein/Aus-Verfahren arbeiten.

Bei der letztgenannten Ausführungsform ergibt sich der Vorteil, daß die Erzeugung und Verarbeitung der digitalen Bilddaten schneller und einfacher geht, als vergleichsweise die Behandlung analoger Bilddaten. Derartige digitale Belichtungsarrays können hohe Lichtströme umlenken und lassen daher kurze Belichtungszeiten zu.

Die Mechanismen für die Modulation der Belichtung eines Pixels sind bei den hier angegebenen Belichtungsarrays durchaus unterschiedlich. Es gibt hierbei die Modulation durch Ablenkung, durch Variation einer gerichteten Lichtintensität oder durch die Änderung der Transmission für ein Pixel.

Mit der Erfindung werden also verschiedene Belichtungsverfahren beansprucht, die sich alle dadurch auszeichnen, daß die Belichtung unterschiedlicher Bereiche auf dem Wertdokument parallel erfolgt. Derartige Belichtungsarrays sind :
1.DLP-Arrays- digitale Strahlerzeugung durch Wegkippen des Strahls vom Dokument in einem definierten Tastverhältnis.
2.Mikrolaser-Arrays - analoge Strahlerzeugung durch Regelung der Stromdichte des Laserübergangs.
3.LC-Arrays - analoge Strahlerzeugung durch Regelung der Spannung zwischen Elektroden.
4.Piezokristall-Arrays- digitale Strahlerzeugung durch Regelung der Spannung zwischen Elektroden.
5.Gasentladungsdisplays - analoge Strahlerzeugung durch Regelung des Stroms durchs Plasma.
6.Lumineszenzdisplays - analoge Strahlerzeugung durch Regelung des Stroms am p-n-Übergang.

Vorteil bei allen beanspruchten Belichtungsverfahren ist, daß die verwendeten Anlagen äußerst kompakt sind und es können damit Wertdokumente dezentral hergestellt werden, ohne daß es einer großen, zentralen Logistik bedarf, wie sie bei Kathodenstrahlbelichtern notwendig ist.

Wesentliches Merkmal der Erfindung ist in einer ersten, bevorzugten Ausführungsform, daß zur Belichtung des Wertdokumentes mindestens ein Lichtprozessor verwendet wird, der die in digitaler Form vorliegenden Daten aus einer Datenbank entnimmt, welche die einzelnen Steuerelemente (z.B. Spiegel) des Lichtprozessors ansteuern, wobei der gesamte Lichtprozessor mit seiner Vielzahl der vorhandenen Steuerelemente (z.B. Spiegel, die von einem Strahl beaufschlagt werden) das gesamte Wertdokument gleichzeitig auf einmal oder auch Teile des Wertdokumentes belichtet.

Mit der gegebenen technischen Lehre ergibt sich also der wesentliche Vorteil, daß statt einer Kathodenstrahlröhre ein (digitaler oder analoger) Lichtprozessor verwendet wird, welcher die in digitaler Form vorliegenden Personalisierungsdaten unmittelbar parallel übernehmen kann und in eine individuelle Ansteuerung von Steuer- und Belichtungselementen umsetzt, z.B. die Auslenkung einzelner ein Array bildender Spiegel bewirkt, die dann den auftreffenden Strahl in einen personalisierten Bildstrahl umsetzen.

Damit ergibt sich der wesentliche Vorteil, daß bei relativ gleicher Strahlleistung eine wesentlich höhere Lichtstärke auf dem Wertdokument erzeugt wird, daß ein leichter und relativ kleiner Aufbau gegeben ist, der im übrigen kostengünstig ist und daß die Wertdokumente in 1/10 der vorher benötigten Zeit nun belichtet werden können.

Dies ermöglicht es sogar, daß die Wertdokumente in einem Inline-Prozeß geführt werden können, d. h. die Belichtung findet unmittelbar auf der Entwicklungsstraße statt, so daß die Belichtung und die Entwicklung in ein und demselben Prozeß stattfinden kann.

In einer bevorzugten Ausführungsform der vorliegenden Erfindung ist es vorgesehen, daß für ein Wertdokument lediglich ein einziger (digitaler oder analoger) Lichtprozessor vorgesehen ist, dessen Bildstrahl kleiner ist als die Fläche des zu belichtenden Wertdokumentes, was erfordert, daß entweder der digitale Lichtprozessor über das Wertdokument punktweise, zeilenweise oder abschnittsweise geführt wird, oder umgekehrt, daß das Wertdokument unter dem digitalen Lichtprozessor gesteuert bewegt wird.

In einer anderen Ausgestaltung der Erfindung ist es vorgesehen, daß nicht nur ein Lichtprozessor vorhanden ist, sondern daß die für die verschiedenen Belichtungsfelder des Wertdokumentes mehrere unterschiedliche, den jeweiligen Belichtungsfeldern angepaßte Lichtprozessoren verwendet werden. Hierbei kann es z. B. vorgesehen sein, daß die für das hochauflösende Paßbild verwendeten Lichtprozessoren eine andere Abbildungsqualität aufweisen, als der lediglich für die graphischen Informationen notwendige Lichtprozessor. Hier ergeben sich auch wesentliche Einsparungsmöglichkeiten, denn es braucht lediglich der Lichtprozessor, welcher dem hochauflösenden Paßbild zugeordnet ist, eine entsprechende Auflösungsqualität zu erbringen, während an die Auflösungsqualität der dem graphischen Informationsfeld zugeordneten Lichtprozessor geringere Anforderungen gestellt werden.

Unter dem Begriff 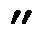 graphische Information" wird bevorzugt die alphanumerische Information verstanden, die auf dem Wertdokument in Form von alphanumerischer Schrift aufgebracht wird, wie z. B. Name, Vorname, Wohnort, Prüfsumme und dgl. mehr. An diese graphischen Informationsfelder werden hinsichtlich der Auflösung wesentlich geringere Anforderungen gestellt als an einen Lichtprozessor, der ein Paßbild erzeugen soll.

Im übrigen kann es vorgesehen sein, daß in den Bildstrahl des digitalen Lichtprozessors ein oder mehrere Spiegel angeordnet sind, die dafür sorgen, daß die einzelnen Felder auf dem Wertdokument, welche die alphanumerische Information enthalten, räumlich voneinander getrennt sind und dennoch von dem gleichen digitalen Lichtprozessor mit einem unterteilten Array belichtet werden.

Es handelt sich hierbei also um einen Strahlteiler.

Ebenso können in den Bildstrahl entsprechende Sammel- oder Zerstreuungslinsen eingebaut werden.

Unter dem Begriff 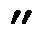 Lichtprozessor" wird nicht nur eine Array-Anordnung aus einzelnen, adressierbaren und getrennt auslenkbaren Spiegeln verstanden, sondern es wird in Weiterführung dieses Begriffes auch eine Array-Anordnung aus einzel adressierbaren Lasern (Lichtquellen) verstanden, wobei jede Lichtquelle (Laser) einem Pixel auf dem Wertdokument zugeordnet ist und demzufolge auch jede Lichtquelle einzeln adressiert ist, so daß jedes Pixel auf dem Wertdokument einzeln ansteuerbar ist.

Hierbei kann es wiederum vorgesehen sein, daß dem Feld auf dem Wertdokument, welches dem Paßbild zugeordnet ist, eine höhere Dichte von Lichtquellen im digitalen Lichtprozessor zugeordnet ist, als vergleichsweise den Feldern, welche lediglich die alphanumerische Information enthalten.

Im übrigen kann es auch vorgesehen sein, daß die alphanumerischen Informationsfelder nicht durch einen digitalen Lichtprozessor belichtet werden, sondern durch einen Vektor-Scanner, welcher im wesentlichen aus zwei getrennt voneinander adressierbaren Spiegeln besteht, die XY-Richtung auslenkbar sind und welche die geforderte alphanumerische Information als Belichtungsstrahl auf das Wertdokument 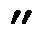 schreiben".

In einer weiteren Ausführungsform der Erfindung wird für die Belichtung einfacher Buchstabentypen anstelle eines Belichtungsarrays ein zeilenförmig arbeitender Scanner für die Belichtung verwendet. Ein solcher Scanner ist für die in vektorieller Form darstellbaren Buchstaben durchaus geeignet.

Es muß dann lediglich ein Belichtungsarray für die Belichtung des Paßbildes vorgesehen werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert in perspektivischer Darstellung die Belichtung eines Wertdokumentes mit einem digitalen Lichtprozessor;
- Figur 2:: Die Darstellung der Belichtung von alphanumerischen Informationen auf dem Wertdokument mit einem digitalen Lichtprozessor;
- Figur 3:: Eine gegenüber Figur 1 abgewandelte Ausführungsform der Belichtung.

In dem folgenden Ausführungsbeispiel wird lediglich die Verwendung eines digitalen Lichtprozessors näher beschrieben. Die Erfindung ist hierauf jedoch nicht beschränkt und erstreckt sich demzufolge auch auf analoge Lichtprozessoren.

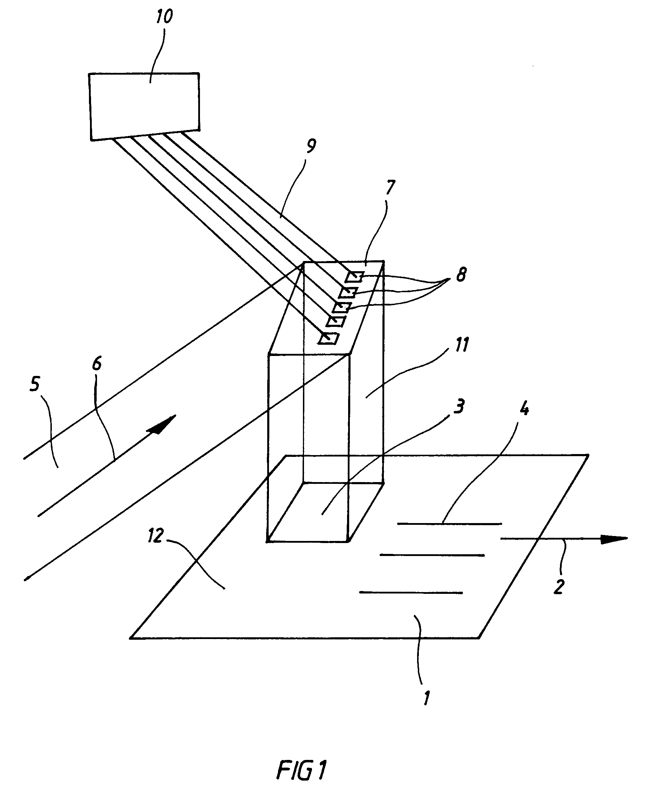

Auf einem Wertdokument 1 ist ein Feld für ein Paßbild 3 und mehrere Felder für die Unterbringung graphischer (alphanumerischer) Informationen 4 vorhanden. Das Wertdokument 1 soll mit einem sogenannten digitalen Lichtprozessor 7 belichtet werden. Der digitale Lichtprozessor besteht im wesentlichen aus einem Feld von reihenweise und spaltenweise angeordneten individuell und digital ansteuerbaren Spiegeln 8, wobei die Spiegel über eine digitale Ansteuerung 9 von einer Datenbank 10 mit digitalen Ansteuersignalen versorgt werden. Es wird über einen Strahl 5 (z. B. einen Lichtstrahl) in Pfeilrichtung 6 das Array des digitalen Lichtprozessors 7 angesteuert und entsprechend der Auslenkung der einzelnen Spiegel wird ein personalisiertes Lichtsignal über den Bildstrahl 11 auf das Wertdokument 1 eingestrahlt. Hierbei ist es im Ausführungsbeispiel nach Figur 1 vorgesehen, daß der digitale Lichtprozessor 7 stillsteht und das Wertdokument 1 in Pfeilrichtung 2 unter dem digitalen Lichtprozessor 7 hindurchbewegt wird.

Selbstverständlich kann auch die kinematische Umkehrung verwirklicht werden, bei der sich der digitale Lichtprozessor 7 bewegt und das Wertdokument 1 stillsteht. In einer Weiterbildung ist es vorgesehen, daß sowohl das Wertdokument 1 als auch der digitale Lichtprozessor 7 bewegt werden.

Neben dem gerade durch den digitalen Lichtprozessor 7 bestrahlten Paßbild 3 sind noch weitere Felder für alphanumerische Informationen 4 auf dem Wertdokument 1 vorhanden, die bereits schon vorher von dem gleichen digitalen Lichtprozessor 7 bestrahlt wurden.

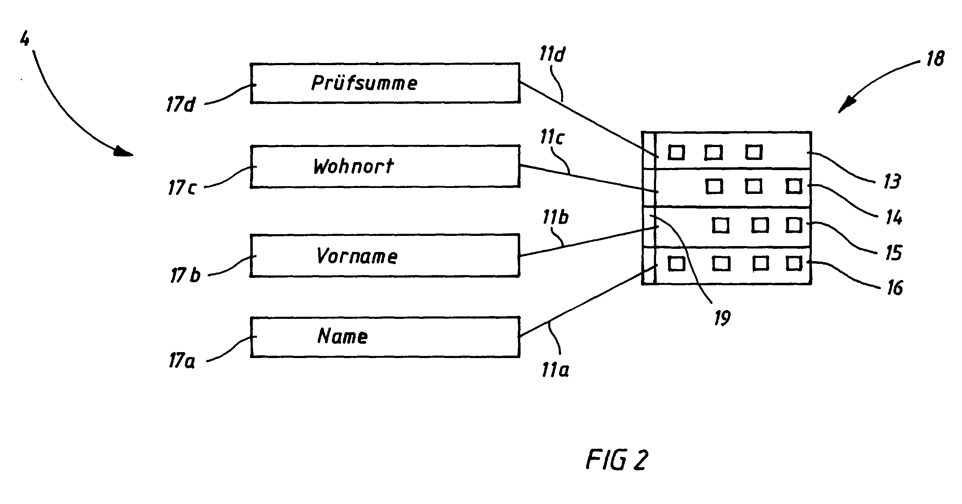

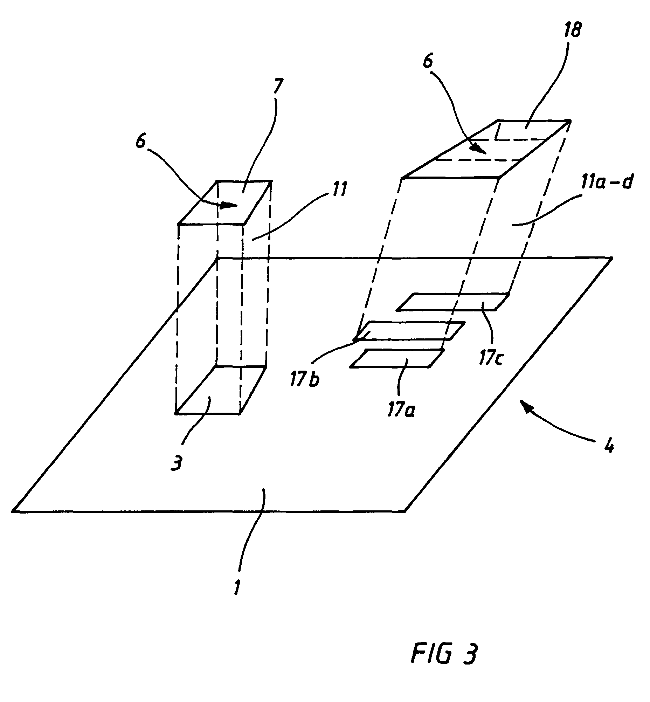

In einer anderen Ausgestaltung der vorliegenden Erfindung ist gemäß Figur 2 und 3 vorgesehen, daß dem Feld für das Paßbild 3 ein erster digitaler Lichtprozessor 7 zugeordnet wird, während dem Feld für die graphischen Informationen 4 ein zweiter digitaler Lichtprozessor 18 zugeordnet wird. Beide werden von getrennten Strahlen 5 in Pfeilrichtung 6 versorgt und weisen getrennt adressierbare Spiegelfelder auf.

Beiden digitalen Lichtprozessor 18 zur Erzeugung der alphanumerischen Informationen im Bereich der einzelnen Felder 17 (nämlich 17a,b,c,d) ist ein besonderes Spiegelsystem 19 zugeordnet, welches eine Strahlenaufteilung in die Bildstrahlen 11a,11b,11c,11d bewerkstelligt.

Hierbei ist vorgesehen, daß der digitale Lichtprozessor 18 aus einer Reihe von zeilenweise angeordneten Bereichen 13,14,15,16 besteht, wobei jeder Bereich entweder aus einzigen Zeile von nebeneinander angeordneten getrennt adressierbaren Spiegeln besteht oder jeder Bereich auch aus einer Vielzahl von zeilen- und spaltenförmigen Spiegeln besteht.

Durch das nachgeschaltete Spiegelsystem wird der von den einzelnen Spiegeln im Bereich 13-16 erzeugte Bildstrahl in die einzelnen Bildstrahlen 11a-11d aufgespaltet, so daß auch beabstandete und voneinander getrennte Felder 17a,17b,17c und 17d gleichzeitig und simultan miteinander belichtet und erzeugt werden können.

Damit ist eine wesentliche Erhöhung der Verarbeitungsgeschwindigkeit gegeben.

Auf der Oberfläche 12 des Wertdokumentes sind in an sich bekannter Weise lichtempfindliche Schichten angeordnet, die mit den beschriebenen Lichtprozessoren 7,18 belichtet werden.

Statt der Belichtung mit einem Lichtstrahl ist auch die Belichtung in einem anderen Bereich vorgesehen, welcher z. B. einen Farbumschlag auf der lichtempfindlichen Oberfläche des Wertdokumentes 1 hervorruft.

Derartige digitale Lichtprozessoren sind im übrigen auch für die Einbelichtung von sogenannten 2D-Barcodes geeignet. Es handelt sich hierbei um Barcodes, bei denen nicht nur die Länge ausgewertet wird, sondern die aus einzelnen, verteilt angeordneten Pixeln besteht, so daß auch noch deren Inhalt mit ausgewertet wird.

Mit einem 1000 x 1000 Pixelarray lassen sich deshalb 1 Mbit Informationen abspeichern.

Dieser Wert kann bei Farbemulsionen verdreifacht werden, indem jede Farbschicht selektiv angesprochen wird. Werden 4 Stufen optischer Dichte pro Farbe belichtet, lassen sich mit einem DLP 2Mbyte Daten pro Bild abspeichern. Die Information kann sehr elegant ausgelesen werden, da CCD-Chips dieselbe Pixelstruktur haben.

In einer anderen Weiterbildung der Erfindung ist vorgesehen, daß mit der definierten Pixelanordnung es möglich ist, daß in das belichtete Feld Sicherheitsmerkmale eingebaut werden, weil beispielsweise einzelne Pixel definiert manipuliert werden können.

In einer dritten Weiterbildung ist es vorgesehen, daß mit den digitalen Lichtprozessoren nach der vorliegenden Erfindung derart hohe Leistungsdichten erzeugt werden können, daß auch thermisch empfindliche Materialien damit belichtet werden können. Es kann daher auf einen Entwicklungsprozeß verzichtet werden und statt dessen ein Wertdokument durch thermische Behandlung entsprechend personalisiert werden.

Eine derartige thermische Behandlung entspricht beispielsweise einer thermischen Behandlung eines Faxpapiers.

### ZEICHNUNGSLEGENDE

- 1.: Wertdokument
- 2.: Pfeilrichtung
- 3.: Paßbiid
- 4.: graphische Information
- 5.: Strahl
- 6.: Pfeilrichtung
- 7.: digitaler Lichtprozessor
- 8.: Spiegel
- 9.: digitale Ansteuerung
- 10.: Datenbank
- 11.: Bildstrahl eines Zeilenarrays
- 12.: Oberfläche
- 13.: Bereich
- 14.: Bereich
- 15.: Bereich
- 16.: Bereich
- 17.: Feld 17a, 17b, 17c, 17d
- 18.: digitaler Lichtprozessor
- 19.: Spiegelsystem

## Patentansprüche

1. Verfahren zur Personalisierung von Wertdokumenten, deren Oberfläche strahlempfindlich ausgebildet ist und in unterschiedliche Felder unterteilt ist, auf denen mittels Strahlbelichtung Bild- und/oder alphanumerische Informationen einschreibbar sind,
**dadurch gekennzeichnet,** daß
zur Belichtung des Wertdokuments (1) mindestens ein paralleler Lichtprozessor (7) vorgesehen ist, der aus einem Feld (Array) von einer Vielzahl gleichzeitig ansteuerbarer Steuerelementen besteht, von denen jeder die Belichtung eines Bildpunktes des strahlempfindlichen Wertdokument (1)moduliert.

2. Verfahren nach Anspruch 1, **dadurch gekennzeichnet,** daß der parallele Lichtprozessor digital ansteuerbar ist.

3. Verfahren nach Anspruch 1, **dadurch gekennzeichnet,** daß der parallele Lichtprozessor analog ansteuerbar ist und daß jedes Steuerelement eine kontinuierliche Skala von Helligkeiten erzeugt.

4. Verfahren nach einem der Ansprüche 1-3, **dadurch gekennzeichnet,** daß die zu belichtende Fläche des Wertdokuments (1) größer ist als die Fläche des bilderzeugenden Strahls (1) eines Zeilenarrays und daß das Wertdokument (1) unter dem stehenden digitalen Lichtprozessor (7) hindurch bewegt wird.

5. Verfahren nach einem der Ansprüche 1-3, **dadurch gekennzeichnet,** daß die zu belichtende Fläche des Wertdokuments (1) größer ist als die Fläche des bilderzeugenden Strahls (11) eines Zeilenarrays und daß der digitale Lichtprozessor (7) über das stehende Wertdokument (1) hinweg bewegt wird.

6. Verfahren nach einem der Ansprüche 4 oder 5, **dadurch gekennzeichnet,** daß dem zu belichtenden Wertdokument (1) mehrere, getrennt voneinander ansteuerbare, digitale Lichtprozessoren zugeordnet sind, deren Strahlengang für die Anforderungen der entsprechenden Belichtungsfelder optimiert ist.

7. Verfahren nach einem der Ansprüche 4-6, **dadurch gekennzeichnet,** daß mehrere Lichtprozessoren (7) in Transportrichtung der zu belichtenden Dokumente angeordnet sind, und daß jedem Wertdokument ein digitaler Lichtprozessor (7) zugeordnet ist.

8. Verfahren nach einem der Ansprüche 4-6, **dadurch gekennzeichnet,** daß mit einem einzigen Lichtprozessor (7) mehrere Belichtungsfelder eines Wertdokumentes nacheinanderfolgend belichtet werden.

9. Verfahren nach einem der Ansprüche 5-8, **dadurch gekennzeichnet,** daß der digitale Lichtprozessor (7) zur Belichtung des die Bildinformation enthaltenden Feldes eine höhere Auflösung (höhere Pixeldichte) aufweist, als der digitale Lichtprozessor, der die Felder belichtet, in welche die alphanumerische Information eingeschrieben wird.

10. Verfahren nach einem der Ansprüche 1 bis 9, **dadurch gekennzeichnet,** daß die Taktfrequenz zur Belichtung hintereinander folgender Wertdokumente (1) so hoch ist, daß die Geschwindigkeit nachfolgender Entwicklungs- und Verarbeitungsschritte nicht durch die vorherige Belichtung limitiert wird.

11. Vorrichtung zur Ausführung des Verfahrens nach einem der Ansprüche 1 bis 10, **dadurch gekennzeichnet,** daß der digitale Lichtprozessor (7) aus einem Feld von individuell und digital ansteuerbaren Spiegeln (8) besteht, die von einem Strahl (5) angestrahlt werden und diesen Strahl in eine Vielzahl individueller Bildstrahlen (11) aufteilen, welche die graphische Information auf das Wertdokument (1) schreiben.

12. Vorrichtung zur Ausführung des Verfahrens nach einem der Ansprüche 1 bis 10, **dadurch gekennzeichnet,** daß der Lichtprozessor (7) aus einem oder mehreren Mikrolaser-Arrays besteht.

13. Vorrichtung zur Ausführung des Verfahrens nach einem der Ansprüche 1 bis 10, **dadurch gekennzeichnet,** daß der Lichtprozessor (7) aus einem oder mehreren LC-Displays besteht.

14. Vorrichtung zur Ausführung des Verfahrens nach einem der Ansprüche 1 bis 10, **dadurch gekennzeichnet,** daß der Lichtprozessor (7) aus einem oder mehreren Piezokristall-Arrays besteht.

15. Vorrichtung zur Ausführung des Verfahrens nach einem der Ansprüche 1 bis 10, **dadurch gekennzeichnet,** daß der Lichtprozessor (7) aus einem oder mehreren Gasentladungsarrays besteht.

16. Vorrichtung zur Ausführung des Verfahrens nach einem der Ansprüche 1 bis 10, **dadurch gekennzeichnet,** daß der Lichtprozessor (7) aus einem oder mehreren Lumineszenzdisplays besteht.

17. Vorrichtung nach einem 11 bis 16, **dadurch gekennzeichnet,** daß im Strahlengang des Bildstrahls (11) Strahlteiler, insbesondere Sammel- und/oder Zerstreuungslinsen angeordnet sind.

18. Vorrichtung nach einem der Ansprüche 11 bis 17, **dadurch gekennzeichnet,** daß der Bildstrahl (11) zur Belichtung des Wertdokuments (1) im sichtbaren Spektralbereich liegt.

19. Vorrichtung nach einem der Ansprüche 11 bis 18, **dadurch gekennzeichnet,** daß der Bildstrahl (11) zur Belichtung des Wertdokuments (1) im unsichtbaren Spektralbereich, insbesondere im UV und/oder IR-Bereich liegt.

20. Vorrichtung nach einem der Ansprüche 11 bis 19, **dadurch gekennzeichnet, daß** statt der Belichtung mit einem Lichtstrahl, die Belichtung in einem anderen Spektralbereich vorgesehen ist, die einen Farbumschlag auf der belichteten Oberfläche des Wertdokuments (1) hervorruft.

21. Vorrichtung nach einem der Ansprüche 11 bis 20, **dadurch gekennzeichnet, daß** der Lichtprozessor für die Einbelichtung von 2D-Barcodes geeignet ist.

22. Vorrichtung nach einem der Ansprüche 11 bis 21, **dadurch gekennzeichnet, daß** in dem belichteten Feld des Wertdokuments (1) Sicherheitsmerkmale eingebaut sind.

23. Vorrichtung nach einem der Ansprüche 11 bis 22, **dadurch gekennzeichnet, daß** der Lichtprozessor (7) eine thermische Veränderung auf oder in der Oberfläche des Wertdokuments erzeugt.
